(19)

**Europäisches Patentamt**
**European Patent Office**
**Office européen des brevets**

(11) **EP 4 651 153 A1**

(12) **EUROPEAN PATENT APPLICATION**

(43) Date of publication:
**19.11.2025 Bulletin 2025/47**

(21) Application number: **25175289.5**

(22) Date of filing: **09.05.2025**

(51) International Patent Classification (IPC):
*G21D 3/00* *(2006.01)* *G21C 7/08* *(2006.01)*

(52) Cooperative Patent Classification (CPC):
**G21D 3/001;** G21C 7/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.05.2024 KR 20240061863**

(71) Applicant: **Korea Atomic Energy Research
Institute
Daejeon 34057 (KR)**

(72) Inventors:
• **JO, Yu Gwon**
 **34020 Daejeon (KR)**
• **WON, Jong Hyuck**
 **34032 Daejeon (KR)**
• **CHOE, Jiwon**
 **35029 Daejeon (KR)**
• **LIM, Jae-Yong**
 **34022 Daejeon (KR)**

(74) Representative: **Ipsilon
Le Contemporain
50 Chemin de la Bruyère
69574 Dardilly Cedex (FR)**

(54) **APPRATUS FOR CONTROLLING NUCLEAR REACTOR AND METHOD THEREOF**

(57) Disclosed are an apparatus for controlling a nuclear reactor and a method thereof. The apparatus includes a processor and a memory. The processor obtains a neutron flux and an effective multiplication factor representing a ratio between neutron production and neutron annihilation rates in the nuclear reactor, obtains plural parameters related to neutrons by using neutron flux, updates a total insertion length representing an entire length of insertion of each control rod into a core by using at least one of an overlap length representing a length of overlap of the control rods in the nuclear reactor, the plural parameters, or any combination thereof, and identifies positions of each control rod for changing a state of the nuclear reactor to a critical state by using at least one of the updated total insertion length, the effective multiplication factor, or any combination thereof.

EP 4 651 153 A1

Description

## TECHNICAL FIELD

The present disclosure relates to an apparatus for controlling a nuclear reactor and a method thereof, and more particularly, to a technique for updating a control rod position to change the state of a nuclear reactor.

## BACKGROUND

A nuclear reactor is required to be operated based on a critical condition to maintain a constant output. In a critical state-based reactor, the production rate of neutrons generated by nuclear reactions and the annihilation rate of neutrons absorbed by materials inside the nuclear reactor or leaked out of the nuclear reactor may be in equilibrium. Therefore, various reactivity control systems are installed in nuclear power plants to control the number of neutrons, and through the reactivity control system, a nuclear reactor control apparatus may control an amount of neutron absorbing material in the nuclear reactor.

For example, a pressurized light-water nuclear power plant may control the boric acid concentration to maintain the nuclear reactor in a critical state by using control rods that are withdrawn outside the active core region during full power operation. However, a 4-th generation nuclear power plant, including a next-generation small modular reactor (SMR), a sodium-cooled fast reactor (SFR), and/or a very high temperature reactor (VHTR), which adopt a soluble-boron-free operation strategy that does not use soluble boric acid, may maintain criticality by adjusting the position of the control rods during power operation. To maintain the nuclear reactor in a critical state, the positions of control rods may be changed depending on state variables such as burnup, power, coolant temperature, and/or flow rate. Therefore, in the nuclear reactor design stage, there is a need to accurately predict the critical positions of the control rods according to the nuclear reactor state in order to optimize the core design and analyze the safety margin using the core nuclear design computer code. In addition, in the computer code used in the nuclear reactor simulator for supporting the operation of the nuclear reactor, the critical positions of the control rods according to the state of the nuclear reactor need to be accurately predicted in order to predict the optimal operation scenario.

## SUMMARY

The present disclosure has been made to solve the above-mentioned problems occurring in the prior art while advantages achieved by the prior art are maintained intact.

One aspect of the present disclosure provides an apparatus for controlling a nuclear reactor and a method thereof capable of identifying or predicting a critical state of a core by using a neutron equilibrium equation in a core design computer code.

Another aspect of the present disclosure provides an apparatus for controlling a nuclear reactor and a method thereof capable of fundamentally eliminating convergence instability when performing a search for a critical state of a core using a Monte Carlo nuclear design computer code.

Still another aspect of the present disclosure provides an apparatus for controlling a nuclear reactor and a method thereof capable of identifying or predicting a position of a control rod and/or an angle of a control drum for a critical state of a core.

Still another aspect of the present disclosure provides an apparatus for controlling a nuclear reactor and a method thereof capable of identifying or predicting a critical state of a core using a neutron equilibrium equation in a nuclear reactor simulator.

The technical problems to be solved by the present disclosure are not limited to the aforementioned problems, and any other technical problems not mentioned herein will be clearly understood from the following description by those skilled in the art to which the present disclosure pertains.

According to one aspect of the present disclosure, an apparatus for controlling a nuclear reactor includes a processor and a memory. The processor obtains a neutron flux and an effective multiplication factor representing a ratio between a neutron production rate and a neutron annihilation rate in the nuclear reactor, obtains a plurality of parameters related to neutrons by using the neutron flux, updates a total insertion length representing an entire length of insertion of each of a plurality of control rods into a core by using at least one of an overlap length representing a length of overlap of the plurality of control rods in the nuclear reactor, the plurality of parameters, or any combination thereof, and identifies positions of each of the plurality of control rods for changing a state of the nuclear reactor to a critical state by using at least one of the updated total insertion length, the effective multiplication factor, or any combination thereof.

According to another aspect of the present disclosure, an apparatus for controlling a nuclear reactor includes a processor and a memory. The processor obtains a neutron flux and an effective multiplication factor representing a ratio between a neutron production rate and a neutron annihilation rate in the nuclear reactor, obtains a plurality of parameters related to neutrons by using the neutron flux, and identifies an angle of a control drum within the nuclear reactor for changing a state of the nuclear reactor to a critical state by using at least one of the effective multiplication factor, the plurality of parameters, or any combination thereof.

**BRIEF DESCRIPTION OF THE DRAWINGS**

The above and other objects, features and advantages of the present disclosure will be more apparent from the following detailed description taken in conjunction with the accompanying drawings:

FIG. 1 is a block diagram illustrating an example of a nuclear reactor control apparatus according to an embodiment of the present disclosure;

FIG. 2 is a cross-sectional view illustrating an example of a nuclear reactor related to a nuclear reactor control apparatus according to an embodiment of the present disclosure;

FIG. 3 is a side view illustrating an example of a nuclear reactor related to a nuclear reactor control apparatus according to an embodiment of the present disclosure;

FIG. 4 is a diagram illustrating an example of a graph showing the positions of a plurality of control rods according to an embodiment of the present disclosure;

FIG. 5A is a diagram illustrating an example of a graph showing the position of a control rod identified by a nuclear reactor control apparatus according to an embodiment of the present disclosure;

FIG. 5B is a diagram illustrating an example of a graph showing an effective multiplication factor identified by a nuclear reactor control apparatus according to an embodiment of the present disclosure;

FIG. 6 illustrates an example of a flowchart related to a nuclear reactor control method according to an embodiment of the present disclosure;

FIG. 7 is a diagram illustrating an example of an angle of a control drum related to a nuclear reactor control apparatus according to an embodiment of the present disclosure; and

FIG. 8 illustrates an example of a flowchart related to a nuclear reactor control method according to an embodiment of the present disclosure.

**DETAILED DESCRIPTION**

Hereinafter, some embodiments of the present disclosure will be described in detail with reference to the exemplary drawings. In adding the reference numerals to the components of each drawing, it should be noted that the identical or equivalent component is specified by the identical numeral even when they are displayed on other drawings. Further, in describing the embodiment of the present disclosure, a detailed description of the related known configuration or function will be omitted when it is determined that it interferes with the understanding of the embodiment of the present disclosure.

Terms, such as first, second, A, B, (a), (b) or the like may be used herein when describing components of the present disclosure. The terms are provided only to distinguish the elements from other elements, and the essences, sequences, orders, and numbers of the elements are not limited by the terms. In addition, unless defined otherwise, all terms used herein, including technical or scientific terms, have the same meanings as those generally understood by those skilled in the art to which the present disclosure pertains. The terms defined in the generally used dictionaries should be construed as having the meanings that coincide with the meanings of the contexts of the related technologies, and should not be construed as ideal or excessively formal meanings unless clearly defined in the specification of the present disclosure.

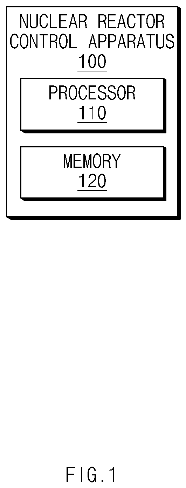

Hereinafter, embodiments of the present disclosure will be described in detail with reference to FIGS. 1 to 8.

FIG. 1 is a block diagram illustrating an example of a nuclear reactor control apparatus according to an embodiment of the present disclosure.

Referring to FIG. 1, a nuclear reactor control apparatus 100 according to an embodiment of the present disclosure may be implemented inside or outside a nuclear facility, and all or some of the components included in the nuclear reactor control apparatus 100 may be implemented inside or outside the nuclear facility. In this case, the nuclear reactor control apparatus 100 may be formed integrally with internal control devices of the nuclear facility (or nuclear reactor), or may be implemented as a separate device and connected to the control devices of the nuclear facility through a separate connection device. For example, the nuclear reactor control apparatus 100 may further include components not illustrated in FIG. 1.

Referring to FIG. 1, the nuclear reactor control apparatus 100 according to an embodiment may include a processor 110 and a memory 120. For example, the processor 110 and the memory 120 may be electrically and/or operably coupled with each other through electronical components including a communication bus. Hereinafter, hardware being operatively coupled may include a direct connection and/or an indirect connection between the hardware being established by wires and/or wirelessly, such that second hardware is controlled by first hardware among the hardware. Although illustrated based on different blocks, the embodiment is not limited thereto, and some of the hardware in FIG. 1 may be included in a single integrated circuit such as a system on chip (SoC). The type and/or number of hardware included in the nuclear reactor control apparatus 100 is not limited to that illustrated in FIG. 1. For example, the nuclear reactor control apparatus 100 may include only some of the hardware illustrated in FIG. 1.

The nuclear reactor control apparatus 100 according to an embodiment may include hardware for processing data based on one or more instructions. The hardware for processing data may include the processor 110.

For example, the hardware for processing data may include an arithmetic and logic unit (ALU), a floating point unit (FPU), a field programmable gate array (FPGA), a central processing unit (CPU), a graphic processing unit (GPU), and/or an application processor (AP). The processor 110 may have a single-core processor structure, or may have the structure of a multi-core processor structure including dual cores, quad cores, hexa corse, or octa cores. However, the embodiments of the present disclosure are not limited thereto.

The memory 120 of the nuclear reactor control apparatus 100 according to an embodiment may include a hardware component for storing data and/or instructions input and/or output to the processor 110.

For example, the memory 120 may include a volatile memory including a random-access memory (RAM), and/or a non-volatile memory including a read-only memory (ROM).

For example, the volatile memory may include at least one of a dynamic RAM (DRAM), a static RAM (SRAM), a cache RAM, a pseudo SRAM (PSRAM), or any combination thereof. For example, the non-volatile memory may include at least one of a programmable ROM (PROM), an erasable PROM (EPROM), an electrically erasable PROM (EEPROM), a flash memory, a hard disk, a compact disc, a solid state drive (SSD), an embedded multi-media card (eMMC), or any combination thereof. However, the embodiments of the present disclosure are not limited thereto.

The nuclear reactor control apparatus 100 according to an embodiment may control a nuclear reactor based on a critical state to maintain a constant output. The critical state may include a state in which the neutron production rate of neutrons generated based on a nuclear reaction in the nuclear reactor is in equilibrium with the neutron annihilation rate of neutrons absorbed by materials inside the nuclear reactor or leaked out of the nuclear reactor.

When the nuclear reactor control apparatus 100 according to an embodiment does not control the nuclear reactor to maintain the critical state for a specified time period or longer, the nuclear reactor may escape the critical state because the nuclide composition of the nuclear fuel is changed due to a nuclear reaction within the nuclear reactor. For example, the extent to which a nuclear reactor deviates from a critical state may be defined as reactivity.

The nuclear reactor control apparatus 100 according to an embodiment may maintain the output of the nuclear reactor by maintaining the nuclear reactor in the critical state. The nuclear reactor control apparatus 100 may update the position of the control rod within the nuclear reactor to maintain the output of the nuclear reactor.

For example, the nuclear reactor may include a next-generation light water type small modular reactor (SMR) that adopts a soluble-boron-free operation strategy that does not use soluble boric acid, a sodium-cooled fast reactor (SFR), and/or a very high temperature reactor (VHTR). For example, the nuclear reactor may include a space micro-reactor that includes a control drum containing a neutron absorbing material (e.g., boron carbide) and a reflector (e.g., beryllium).

In a core design computer code executed by the processor 110 of the nuclear reactor control apparatus 100 according to an embodiment, a neutron equilibrium equation expressed as following Equation 1 may be used to obtain an output distribution and an effective multiplication factor for a critical state of the nuclear reactor. For example, Equation 1 may represent a neutron equilibrium equation to which the nuclear fission source repetition is applied.

【Equation 1】

$$\mathbf{M}\vec{\phi} = \frac{1}{k_{eff}}\mathbf{F}\vec{\phi},$$

Referring to Equation 1, for example, 'M' may represent a neutron annihilation operator. For example, 'F' may represent a fission neutron production operator. For example, $\vec{\Phi}$ may represent a neutron flux distribution. For example, $k_{eff}$ may represent an effective multiplication factor. For example, the effective multiplication factor may represent the ratio between the neutron production rate and the neutron annihilation rate in the nuclear reactor. For example, when the effective multiplication factor is equal to a target effective multiplication factor (e.g., '1'), the state of the nuclear reactor may be critical. For example, the target effective multiplication factor may represent the ratio between the neutron production rate and the neutron annihilation rate identified in the critical state of the nuclear reactor.

For example, the core nuclear design computer code may include a Monte Carlo nuclear design computer code and/or a deterministic nuclear design computer code. The core nuclear design computer code may represent software associated with a nuclear reactor.

The nuclear reactor control apparatus 100 according to an embodiment may obtain an effective multiplication factor and neutron flux representing a ratio between a neutron production rate and a neutron annihilation rate of a reactor. For example, the nuclear reactor control apparatus 100 may obtain Equation 2 and Equation 3 based on the nuclear fission source repetition by using Equation 1.

$$\textbf{【Equation 2】}$$

$$\mathbf{M}\big(\vec{h}^{(n)}\big)\vec{\phi}^{(n)} = \frac{1}{k_{eff}^{(n-1)}}\mathbf{F}\vec{\phi}^{(n-1)}$$

Referring to Equation 2, for example, 'n' may represent the number of repetitions of the nuclear fission source. For example, $M(\vec{h}^{(n)})$ may represent a neutron annihilation operator according to $\vec{h}^{(n)}$, which represents the position of the control rod. For example, 'F' may represent a fission neutron production operator. For example, $\langle \vdots \rangle$ may represent an integration operation. For example, $\vec{h}^{(n)}$ may represent a parameter in which the position information of n control rod banks (e.g., multiple control rods) is vectorized. For example, $h_i^{(n)}$ may represent the position of the i-th control bank. For example, $\lim_{n \to \infty} \vec{\phi}^{(n)}$ may have substantially the same value as $\vec{\phi}$.

For example, the nuclear reactor control apparatus 100 may set initial values for the position of the control rod, the effective multiplication factor, and/or the neutron flux.

For example, the control rod bank may represent a plurality of control rods used to control the core reactivity of a nuclear reactor.

For example, the nuclear reactor control apparatus 100 may calculate Equation 3 through Equation 2 to obtain an effective multiplication factor indicating a critical state.

$$\textbf{【Equation 3】}$$

$$k_{eff}^{(n)} = \langle \mathbf{F}\vec{\phi}^{(n)} \rangle / \langle \mathbf{M}\big(\vec{h}^{(n)}\big)\vec{\phi}^{(n)} \rangle$$

For example, the neutron annihilation operator (e.g., $\mathbf{M}(\vec{h}^{(n)})$ in Equation 3) may include a neutron absorption operator by the control rod. The neutron annihilation operator may include a neutron annihilation operator for representing the absorption of neutrons by components distinct from the control rods and/or the annihilation of neutrons leaking out of the nuclear reactor. The neutron annihilation operator may be expressed as following Equation 4.

$$\textbf{【Equation 4】}$$

$$\mathbf{M}\big(\vec{h}^{(n)}\big) = \mathbf{M}_{CR}\big(\vec{h}^{(n)}\big) + \mathbf{M}_{NCR}\big(\vec{h}^{(n)}\big)$$

Referring to Equation 4, for example, $\mathbf{M}_{CR}(\vec{h}^{(n)})$ may represent the neutron absorption operator by the control rod. For example, $\mathbf{M}_{NCR}(\vec{h}^{(n)})$ may represent the neutron annihilation operator. In other words, the neutron annihilation operator may represent the annihilation of neutrons by the control rod and the annihilation of neutrons by other components that are distinct from the control rod.

The nuclear reactor control apparatus 100 according to an embodiment may obtain the plurality of parameters related to neutrons by using neutron flux. The plurality of parameters may be associated with the production of neutrons and/or the annihilation of neutrons.

For example, the plurality of parameters may include at least one of a first parameter representing a neutron absorption rate by at least one of the plurality of control rods, a second parameter representing another absorption rate different from the neutron absorption rate, a third parameter representing a neutron production rate, or any combination thereof. For example, the second parameter may further include the neutron annihilation rate of neutrons leaking out of the nuclear reactor.

For example, the first parameter may be expressed as following Equation 5.

【Equation 5】

$$R_{CR}^{(n)} = \langle \mathbf{M}_{CR}(\vec{h}^{(n)})\vec{\phi}^{(n)} \rangle$$

Referring to Equation 5, $R_{CR}^{(n)}$ may mean the first parameter representing the neutron absorption rate by a control rod.

【Equation 6】

$$R_{NCR}^{(n)} = \langle \mathbf{M}_{NCR}(\vec{h}^{(n)})\vec{\phi}^{(n)} \rangle$$

Referring to Equation 6, $R_{NCR}^{(n)}$ may represent the second parameter.

【Equation 7】

$$P^{(n)} = \langle \mathbf{F}\vec{\phi}^{(n)} \rangle$$

Referring to Equation 7, $P^{(n)}$ may represent the third parameter.

The nuclear reactor control apparatus 100 according to an embodiment may update the plurality of parameters by using a moving average related to the plurality of parameters in order to obtain the plurality of parameters.

For example, the nuclear reactor control apparatus 100 may utilize the moving average for the obtained data values by repeatedly performing at least one of Equation 1 to Equation 7 (e.g., integration for all dimensions). The moving average may be used to reduce the effect of a stochastic error when computing multiple parameters. For example, the nuclear reactor control apparatus 100 may change Equation 5 to Equation 7 to update the plurality of parameters by using the moving average.

For example, when applying the moving average to Equation 5, the nuclear reactor control apparatus 100 may obtain following Equation 8.

【Equation 8】

$$R_{CR}^{(n)} = \sum_{n'=n-N+1}^{n'=n}\langle \mathbf{M}_{CR}(\vec{h}^{(n')})\vec{\phi}^{(n')} \rangle / N_{avg}$$

Referring to Equation 8, $N_{avg}$ may represent the number of statistics.

For example, when applying the moving average to Equation 6, the nuclear reactor control apparatus 100 may obtain following Equation 9.

【Equation 9】

$$R_{NCR}^{(n)} = \sum_{n'=n-N+1}^{n'=n}\langle \mathbf{M}_{NCR}(\vec{h}^{(n')})\vec{\phi}^{(n')} \rangle / N_{avg}$$

For example, when applying the moving average to Equation 7, the nuclear reactor control apparatus 100 may obtain following Equation 10.

【Equation 10】

$$P^{(n)} = \sum_{n'=n-N+1}^{n'=n}\langle \mathbf{F}\vec{\phi}^{(n')} \rangle / N_{avg}$$

The nuclear reactor control apparatus 100 according to an embodiment may update the plurality of parameters by using Equation 8 to Equation 10.

The nuclear reactor control apparatus 100 according to an embodiment may update a total insertion length representing an entire length of insertion of each of a plurality of control rods into a core by using at least one of an overlap length representing a length of overlap of the plurality of control rods (e.g., control rod bank) in the nuclear reactor, the plurality of parameters, or any combination thereof.

For example, the overlap length may be determined based on preset data.

For example, the nuclear reactor control apparatus 100 may obtain the total insertion length by using following Equation 11.

【Equation 11】

$$x^{(n)} = F\left(\vec{h}^{(n)}, h_{overlap}\right).$$

Referring to Equation 11, for example, $x^{(n)}$ may represent the total insertion length. The total insertion length may mean the length of each control rod inserted into the core converted into a single parameter. For example, $h_{overlap}$ may represent the overlap length.

For example, the nuclear reactor control apparatus 100 may obtain a neutron equilibrium equation having a total insertion length as an unknown by using a plurality of parameters, an overlap length, and/or an effective multiplication factor. The neutron equilibrium equation may be expressed as following Equation 12.

【Equation 12】

$$R_{CR}^{(n)}\left(\frac{x^{(n+1)}}{x^{(n)}}\right) + R_{NCR}^{(n)} = \frac{1}{k_{target}}\,P^{(n)}.$$

Referring to Equation 12, $x^{(n+1)}$ may represent the updated total insertion length to change the effective multiplication factor to a target effective multiplication factor representing the critical state of the nuclear reactor. $k_{target}$ may represent a target effective multiplication factor that indicates the critical state of the nuclear reactor. For example, the nuclear reactor control apparatus 100 may obtain following Equation 13 from Equation 12 to obtain the total insertion length.

【Equation 13】

$$x^{(n+1)} = \left(\frac{P^{(n)}/k_{target} - R_{NCR}^{(n)}}{R_{CR}^{(n)}}\right) x^{(n)},$$

Referring to Equation 13, the nuclear reactor control apparatus 100 may update the total insertion length by using a target effective multiplication factor indicating a critical state, a total insertion length before being updated, and/or a plurality of parameters. The nuclear reactor control apparatus 100 may update the total insertion length by repeatedly performing the operation for Equation 13 (or based on the number of nuclear fission source repetitions) such that the effective multiplication factor corresponds to the target effective multiplication factor.

The nuclear reactor control apparatus 100 according to an embodiment may identify the positions of each of the plurality of control rods for changing the state of the nuclear reactor to a critical state by using at least one of the updated total insertion length, the effective multiplication factor (or the target effective multiplication factor), or any combination thereof.

For example, the nuclear reactor control apparatus 100 may identify the position of each of the plurality of control rods for changing the state of the nuclear reactor to a critical state through the updated total insertion length by using Equation 14.

【Equation 14】

$$\vec{h}^{(n+1)} = F^{-1}\left(x^{(n+1)}, h_{overlap}\right).$$

For example, mathematical expression 14 may mean an inverse function of Equation 11. The nuclear reactor control apparatus 100 according to an embodiment may change the state of the nuclear reactor to a critical state by updating the position of a control rod bank. The nuclear reactor control apparatus 100 may maintain the critical state of the nuclear reactor by repeatedly updating the position of the control rod bank during operation of the nuclear reactor.

The nuclear reactor control apparatus 100 according to an embodiment may determine the number of repetitions (e.g., the number of nuclear fission source repetitions) for repeatedly updating the position of the control rod bank.

For example, when using a Monte Carlo nuclear design computer code, the nuclear reactor control apparatus 100 may determine the number of repetitions by setting the number of inactive cycles for excluding values corresponding to data, the number of active cycles for using the values corresponding to the data, and/or a moving average.

For example, when using a deterministic nuclear design computer code, the nuclear reactor control apparatus 100 may determine the number of repetitions by setting allowable tolerances for the total insertion length, neutron flux, and/or criticality. However, the embodiment is not limited thereto.

As described above, the nuclear reactor control apparatus 100 according to an embodiment may prevent the phenomenon of convergence to a specified value when updating the total insertion length by using Equation 13. For example, when all control rod banks enter an all-rod-out (ARO) state, the denominator value of Equation 13 may not be 0 (zero) because there are neutrons leaking outside the active core. For example, the ARO state may represent a state where all control rod banks are positioned outside the active core. The nuclear reactor control apparatus 100 may exclude convergence instability by using Equation 13 to maintain a critical state.

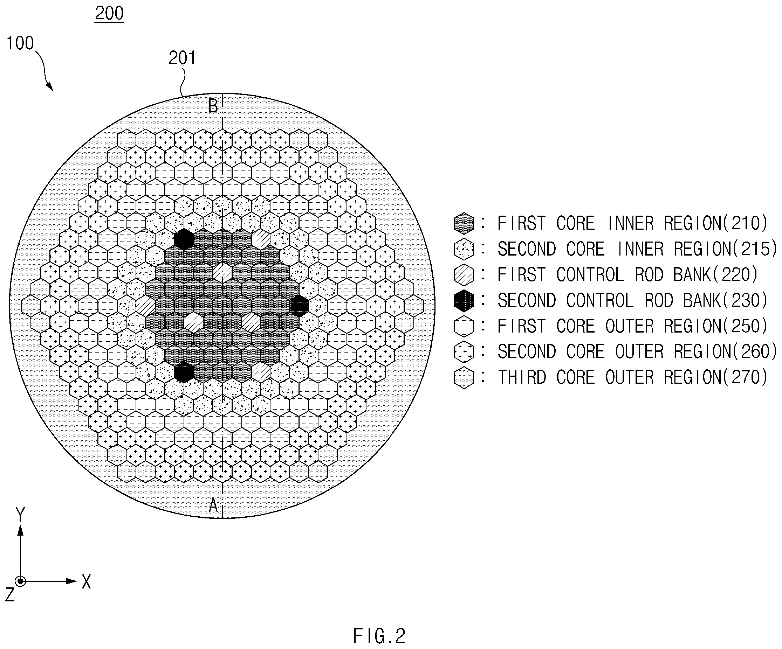

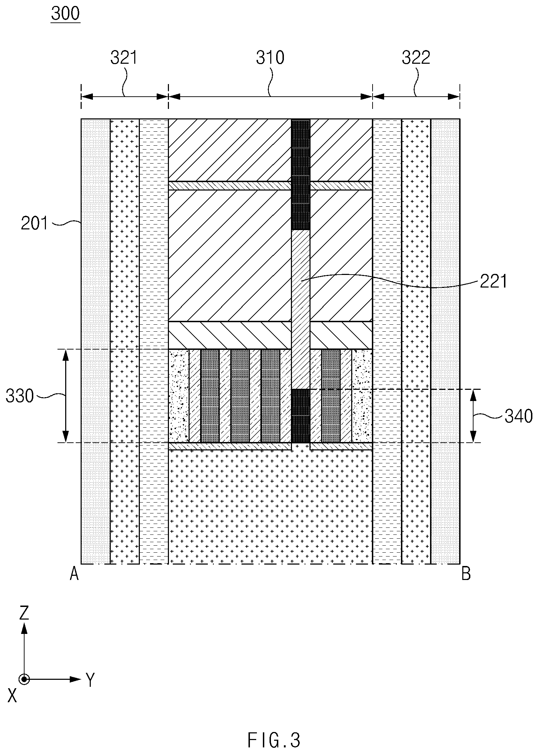

FIG. 2 is a cross-sectional view illustrating an example 200 of a nuclear reactor related to a nuclear reactor control apparatus according to an embodiment of the present disclosure. FIG. 3 is a side view illustrating an example 300 of a nuclear reactor related to a nuclear reactor control apparatus according to an embodiment of the present disclosure. The nuclear reactor control apparatus 100 of FIGS. 2 and 3 may be referred to as the nuclear reactor control apparatus 100 of FIG. 1.

The nuclear reactor control apparatus 100 according to an embodiment may adjust the position of a control rod bank (e.g., a first control rod bank 220 and/or a second control rod bank 230) to control a nuclear reactor 201.

Referring to FIG. 2, for example, the nuclear reactor 201 may include a first core inner region 210, a second core inner region 215, a first core outer region 250, a second core outer region 260, and/or a third core outer region 270. For example, the first core inner region 210 and/or the second core inner region 215 may include an active core region where a nuclear reaction occurs. The first core outer region 250 may include a reflector (e.g., stainless steel). The second core outer region 260 may include boron carbide. The third core outer region 270 may include sodium. Neutrons may be absorbed or annihilated in the first core outer region 250, the second core outer region 260, and/or the third core outer region 270. However, the embodiment is not limited thereto.

The distribution positions of the first control rod bank 220 and/or the second control rod bank 230 arranged within the active core region of the nuclear reactor control apparatus 100 according to an embodiment may be changed based on specified data.

Referring to FIG. 3, the nuclear reactor control apparatus 100 according to an embodiment may change the position 340 of a control rod bank (e.g., at least one 221 of the first control rod bank) in the nuclear reactor 201. The position of the control rod bank may indicate the length of the control rod bank inserted into the core.

For example, regions 321 and 322 of the nuclear reactor 201 may include the first core outer region 250, the second core outer region 260, and/or the third core outer region 270. A region 310 of the nuclear reactor 201 may include the first core inner region 210 and/or the second core inner region 215.

For example, when a position 340 of the control rod bank exceeds an active core length 330, the state of the control rod bank may be an all-rod-out (ARO) state. When the position 340 of the control rod bank corresponds to the active core length 330, the state of the control rod bank may include an all-rod-in (ARI) state.

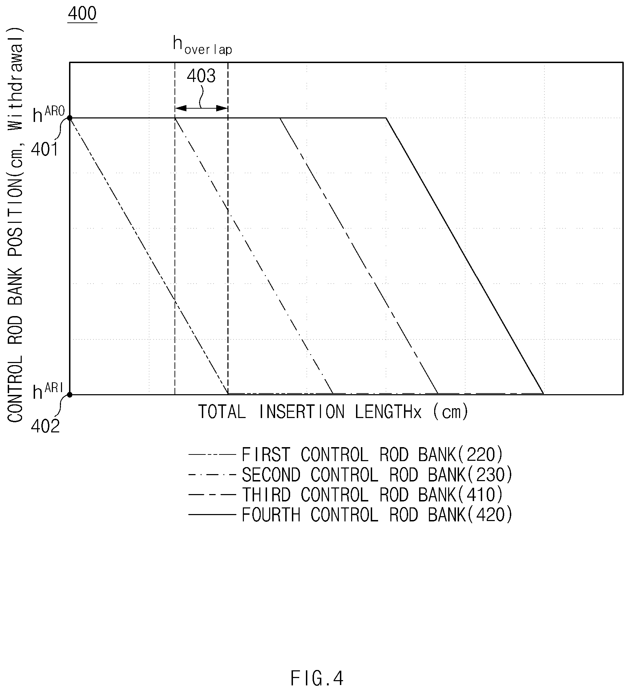

The nuclear reactor control apparatus 100 according to an embodiment may maintain the state of the nuclear reactor in a critical state by adjusting the position 340 of the control rod bank. The nuclear reactor control apparatus 100 may adjust the position of the nuclear reactor by updating the total insertion length using Equation 13. The total insertion length will be described in more detail later with reference to FIG. 4.

FIG. 4 is a diagram illustrating an example of a graph showing the positions of a plurality of control rods according to an embodiment of the present disclosure.

For example, a graph 400 may include a graph illustrating the position of a control rod bank with respect to the total insertion length (e.g., 'x' in FIG. 4). The graph 400 may include a graph illustrating the position of each of a plurality of control rod banks 220, 230, 410, and 420.

For example, a first position 401 may represent a state in which the control rod bank is withdrawn from the core (e.g., ARO state). A second position 402 may represent a state in which the control rod bank is inserted into the core (e.g., an ARI state). The length between the first position 401 and the second position 402 may include the active core length 330 of FIG. 3.

A nuclear reactor (e.g., the nuclear reactor 201 of FIG. 2) associated with a nuclear reactor control apparatus according to an embodiment may include the plurality of control rod banks 220, 230, 410, and 420.

For example, the nuclear reactor control apparatus may maintain the critical state of the nuclear reactor by changing the position of each of the plurality of control rod banks 220, 230, 410, and 420. For example, the nuclear reactor control apparatus may change the state of the nuclear reactor to a critical state by updating the total insertion length, which represents the entire length of the plurality of control rod banks 220, 230, 410, and 420 each inserted into the core.

The nuclear reactor control apparatus according to an embodiment may set an overlap length 403 in which each of a plurality of control rod banks is inserted into the core and overlaps in length. The nuclear reactor control apparatus according to an embodiment may adjust the positions of the plurality of control rod banks according to the total insertion length based on the overlap length 403.

For example, the nuclear reactor control apparatus may initiate a change in the position of the second control rod bank 230 at the time point when the first control rod bank 220 enters a specified position according to the overlap length 403. For example, the nuclear reactor control apparatus may change the position of the third control rod bank 410 according to the overlap length 403 at the time point when the second control rod bank 230 enters a specified position. However, the embodiment is not limited thereto.

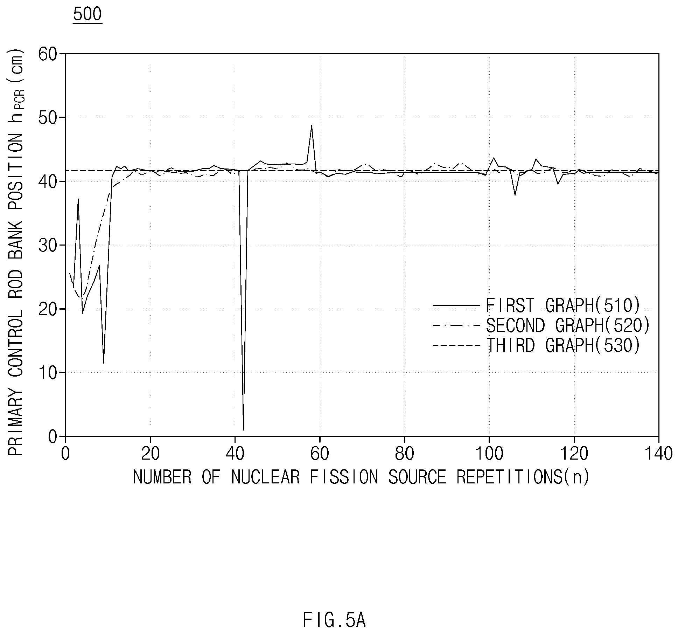

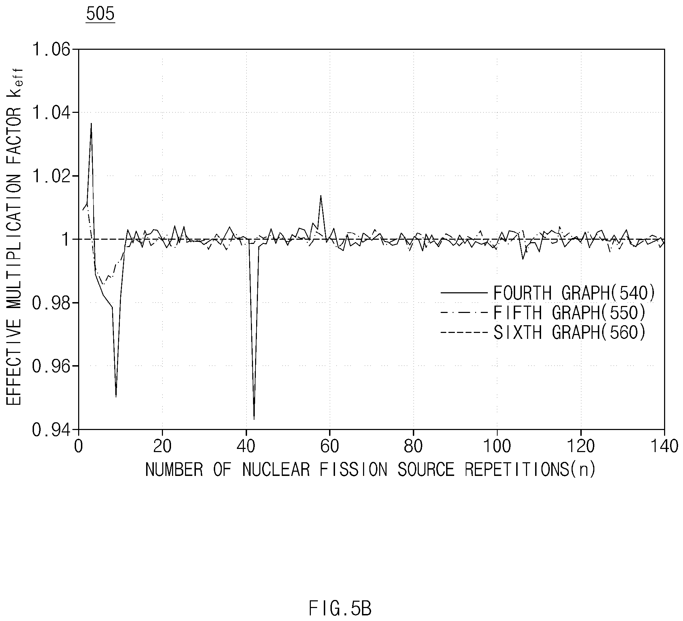

FIG. 5A is a diagram illustrating an example of a graph showing the position of a control rod identified by a nuclear reactor control apparatus according to an embodiment of the present disclosure. FIG. 5B is a diagram illustrating an example of a graph showing an effective multiplication factor identified by a nuclear reactor control apparatus according to an embodiment of the present disclosure.

Referring to FIG. 5A, a graph 500 is shown showing the position of a primary control rod bank (e.g., the first control rod bank 210 of FIG. 3) according to the number of times the nuclear fission source is repeated.

The graph 500 may include a first graph 510 showing a primary control rod bank position identified based on a linear regression method, a second graph 520 showing a primary control rod bank position identified using Equation 13 (and/or Equation 14), and/or a third graph 530 showing a value set to maintain a critical state (e.g., a critical control rod position for maintaining a critical state).

For example, when the nuclear reactor control apparatus identifies the control rod bank position based on a linear regression method, following Equation 15 may be used.

【Equation 15】

$$x^{(n+1)} = \frac{k_{target} - b^{(n)}}{a^{(n)}},$$

For example, referring to Equation 15, $a^{(n)}$ may be expressed as following Equation 16, and $b^{(n)}$ may be expressed as following Equation 17.

【Equation 16】

$$a^{(n)} = \frac{N \sum_{n'=n-N+1}^{n'=n} x^{(n')} k_{eff}^{(n')} - \sum_{n'=n-N+1}^{n'=n} x^{(n')} \sum_{n'=n-N+1}^{n'=n} k_{eff}^{(n')}}{N \sum_{n'=n-N+1}^{n'=n} \left(x^{(n')}\right)^2 - \left(\sum_{n'=n-N+1}^{n'=n} x^{(n')}\right)^2},$$

【Equation 17】

$$b^{(n)} = \frac{\sum_{n'=n-N+1}^{n'=n} k_{eff}^{(n')} - a^{(n)} \sum_{n'=n-N+1}^{n'=n} x^{(n')}}{N},$$

Referring to the first graph 510 showing the primary control rod bank positions identified based on Equation 15 to Equation 17, as the effective multiplication coefficient and the control rod bank positions converge, the slope and intercept of the linear regression method may oscillate, causing instability of the repetition method. In other words, the nuclear reactor control apparatus according to an embodiment may identify a noise value when identifying a primary control rod bank position based on Equation 15 to Equation 17.

That is, when the nuclear reactor control apparatus identifies the control rod bank position by using at least one of Equation 1 to Equation 14 that do not cause instability, the control rod bank position for maintaining the critical state of the nuclear reactor may be more accurately obtained.

Referring to FIG. 5B, a graph 505 is shown showing an effective multiplication factor identified based on the number of nuclear fission source repetitions. The graph 505 may include a fourth graph 540 representing an effective multiplication factor identified based on a linear regression method, a fifth graph 550 representing an effective multiplication factor identified using Equation 13 (and/or Equation 14), and/or a sixth graph 560 representing a value set to maintain a critical state (e.g., a target effective multiplication factor).

For example, the nuclear reactor control apparatus may check the noise value when identifying an effective multiplication factor for maintaining a critical state based on a linear regression method (e.g., Equation 15 to Equation 17). That is, the nuclear reactor control apparatus may maintain the state of the nuclear reactor in a critical state more stably when the effective multiplication factor is identified by using a neutron equilibrium method (e.g., Equation 13 and/or Equation 14) that is distinct from the linear regression method.

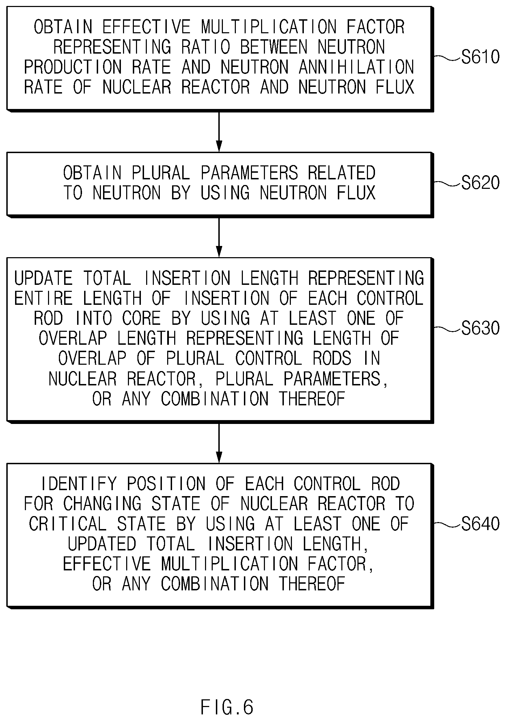

FIG. 6 illustrates an example of a flowchart related to a nuclear reactor control method according to an embodiment of the present disclosure. Hereinafter it is assumed that the nuclear reactor control apparatus 100 of FIG. 1 performs the process of FIG. 6.

Referring to FIG. 6, in operation S610, the nuclear reactor control method may include an operation of obtaining an effective multiplication factor (e.g., $k_{eff}$ in Equation 1) and neutron flux (e.g., $\Phi$ in Equation 1) representing a ratio between a neutron production rate and a neutron annihilation rate of a nuclear reactor.

Referring to FIG. 6, in operation S620, the nuclear reactor control method according to an embodiment may include an operation of obtaining the plurality of parameters related to neutrons by using neutron flux.

For example, the plurality of parameters may include at least one of a first parameter (e.g., $R_{CR}^{(n)}$ in Equation 5 and Equation 8) representing a neutron absorption rate by at least one of the plurality of control rods, a second parameter (e.g., $R_{NCR}^{(n)}$ in Equation 6 and Equation 9) representing another absorption rate different from the neutron absorption rate, a third parameter (e.g., $P^{(n)}$ in Equation 7 and Equation 10) representing a neutron production rate, or any combination thereof. For example, the second parameter may further include the annihilation rate of neutrons leaking out of the nuclear reactor.

For example, the operation of obtaining the plurality of parameters may include an operation of updating the plurality of parameters by using a moving average related to the plurality of parameters.

Referring to FIG. 6, in operation S630, the nuclear reactor control method according to an embodiment may include an operation updating of a total insertion length representing an entire length of insertion of each of a plurality of control rods into a core by using at least one of an overlap length (e.g., the overlap length 403 in FIG. 4) representing a length of overlap of the plurality of control rods (e.g., the plurality of control rods 210, 220, 410, and 420 in FIG. 4) in a nuclear reactor (e.g., the nuclear reactor 201 in FIG. 2), the plurality of parameters, or any combination thereof; and

For example, the operation of updating the total insertion length may include an operation of updating the total insertion length based on the number of fission source repetitions by using Equation 13, such that the effective multiplication factor corresponds to a target effective multiplication factor (e.g., $k_{target}$ in FIG. 13).

Referring to FIG. 6, in operation S640, the nuclear reactor control method according to an embodiment may include an operation of identifying the position of each of the plurality of control rods for changing the state of the nuclear reactor to a critical state by using at least one of the updated total insertion length, the effective multiplication factor, or any combination thereof. For example, the critical state of the nuclear reactor may include a state where the neutron production rate and the neutron annihilation rate are in equilibrium.

For example, the operation of identifying the position of each of the plurality of control rods may include an operation of identifying the position of each of the plurality of control rods by using Equation 14. The operation of identifying the position of each of the plurality of control rods may include an operation of maintaining the critical state of the nuclear reactor by adjusting the position of each of the plurality of control rods based on the number of nuclear fission source repetitions.

For example, the operation of identifying the position of each of the plurality of control rods may include an operation of identifying the position of each of the plurality of control rods by changing the effective multiplication factor to a target effective multiplication factor.

For example, the operation of changing the effective multiplication factor to the target effective multiplication factor may include an operation of identifying the effective multiplication factor having the same value as the target effective multiplication factor (e.g., at least one value within an allowable tolerance including the same value) by calculating at least one of Equation 1 to Equation 14 based on the number of repetitions. For example, the nuclear reactor control apparatus may identify the position of each of the plurality of control rods that causes a critical condition when the effective multiplication factor having the same value as the target effective multiplication factor is identified.

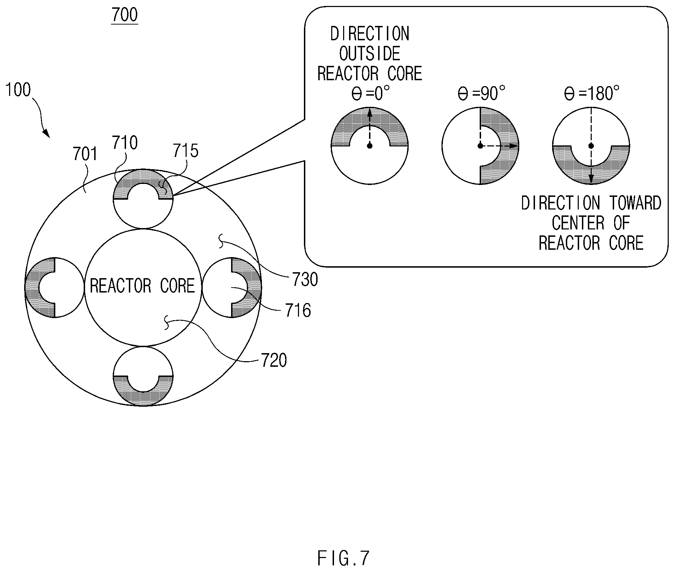

FIG. 7 is a diagram illustrating an example 700 of an angle of a control drum related to a nuclear reactor control apparatus according to an embodiment of the present disclosure. The nuclear reactor control apparatus 100 of FIG. 7 may be referred to as the nuclear reactor control apparatus 100 of FIG. 1.

In the example 700, a nuclear reactor 701 may include at least one control drum 710. At least one of the nuclear reactor 701 or at least one control drum 710 may include a neutron absorbing material 715 (e.g., boron carbide) and/or a reflector 716 and 730 (e.g., beryllium). The nuclear reactor control apparatus 100 may maintain a critical state of a core 720 by adjusting the angle of at least one control drum 710. For example, the nuclear reactor 701 may include a micro space reactor.

For example, when the angle of at least one control drum 710 has a first value (e.g., 0 (zero) degree), the neutron absorption rate may decrease because the direction of the neutron absorbing material 715 is directed toward the outside of the core 720. When the angle of at least one control drum 710 has a second value (e.g., 180 degrees), the neutron absorption rate may increase because the neutron absorbing material 715 is directed toward the core 720. The nuclear reactor control apparatus 100 may change the state of the nuclear reactor by adjusting the angle of at least one control drum 710.

The nuclear reactor control apparatus 100 according to an embodiment may initiate an operation of identifying an angle of at least one control drum 710 by using following Equation 18.

【Equation 18】

$$\mathbf{M}\big(\theta^{(n)}\big)\vec{\phi}^{(n)} = \frac{1}{k_{eff}^{(n-1)}}\mathbf{F}\vec{\phi}^{(n-1)}$$

For example, Equation 18 may represent a neutron equilibrium equation to which the nuclear fission source repetition is applied. For example, $\theta^{(n)}$ may represent the angle of the control drum. For example, $\mathbf{M}(\theta^{(n)})$ may represent a neutron annihilation operator according to the angle of the control drum. For example, the nuclear reactor control apparatus 100 may set initial values for the angle of the control drum, the neutron flux, and/or the effective multiplication factor.

For example, the neutron annihilation operator may include a neutron absorption operator by a control drum. The neutron annihilation operator may include a neutron annihilation operator for representing absorption of neutrons by components distinct from the control drum and/or annihilation of neutrons leaking out of the nuclear reactor. The neutron annihilation operator may be expressed as following Equation 19.

【Equation 19】

$$\mathbf{M}\big(\theta^{(n)}\big) = \mathbf{M}_{CD}\big(\theta^{(n)}\big) + \mathbf{M}_{NCD}\big(\theta^{(n)}\big)$$

Referring to Equation 19, $\mathbf{M}_{CD}(\theta^{(n)})$ may represent a neutron absorption operator by the control drum. $\mathbf{M}_{NCD}(\theta^{(n)})$ may represent a neutron annihilation operator for representing the absorption of neutrons by components distinct from the control drum and/or the annihilation of neutrons leaking out of the nuclear reactor. In other words, the neutron annihilation operator may represent the annihilation of neutrons by the control drum and the annihilation of neutrons by other components that are distinct from the control drum.

The nuclear reactor control apparatus 100 according to an embodiment may obtain a plurality of parameters related to neutrons by using neutron flux.

For example, the plurality of parameters may include at least one of a first parameter representing a neutron absorption rate by the control drum, a second parameter representing another absorption rate different from a neutron absorption rate, a third parameter representing a neutron production rate, or any combination thereof. The second parameter may further include an annihilation rate of neutrons leaking out of the nuclear reactor.

【Equation 20】

$$R_{CD}^{(n)} = \langle \mathbf{M}_{CD}\big(\theta^{(n)}\big)\vec{\phi}^{(n)}\rangle$$

For example, the first parameter (e.g., $R_{CD}^{(n)}$ in Equation 20) may be expressed as Equation 20.

【Equation 21】

$$R_{NCD}^{(n)} = \langle \mathbf{M}_{NCD}\big(\theta^{(n)}\big)\vec{\phi}^{(n)}\rangle$$

For example, the second parameter (e.g., $R_{NCD}^{(n)}$ in Equation 21) may be expressed as Equation 21.

【Equation 22】

$$P^{(n)} = \langle \mathbf{F}\vec{\phi}^{(n)} \rangle$$

For example, the third parameter (e.g., $P^{(n)}$ in Equation 22) may be expressed as Equation 22.

The nuclear reactor control apparatus 100 according to an embodiment may update the plurality of parameters by using a moving average related to the plurality of parameters in order to obtain the plurality of parameters.

For example, when applying the moving average to Equation 20, the nuclear reactor control apparatus 100 may obtain following Equation 23.

【Equation 23】

$$R_{CD}^{(n)} = \sum_{n'=n-N+1}^{n'=n} \langle \mathbf{M}_{CD}(\vec{h}^{(n')})\vec{\phi}^{(n')} \rangle / N_{avg}$$

For example, when applying the moving average to Equation 21, the nuclear reactor control apparatus 100 may obtain following Equation 24.

【Equation 24】

$$R_{NCD}^{(n)} = \sum_{n'=n-N+1}^{n'=n} \langle \mathbf{M}_{NCD}(\vec{h}^{(n')})\vec{\phi}^{(n')} \rangle / N_{avg}$$

For example, when applying the moving average to Equation 22, the nuclear reactor control apparatus 100 may obtain following Equation 25.

【Equation 25】

$$P^{(n)} = \sum_{n'=n-N+1}^{n'=n} \langle \mathbf{F}\vec{\phi}^{(n')} \rangle / N_{avg}$$

The nuclear reactor control apparatus 100 according to an embodiment may identify (or update) the angle of the control drum within the nuclear reactor for changing the state of the nuclear reactor to the critical state by using at least one of the effective multiplication factor, the plurality of parameters, or any combination thereof.

For example, the nuclear reactor control apparatus 100 may change Equation 18 by using the plurality of parameters. The changed Equation 18 may be expressed as following Equation 26.

【Equation 26】

$$R_{CD}^{(n)} \left( \frac{\theta^{(n+1)}}{\theta^{(n)}} \right) + R_{NCD}^{(n)} = \frac{1}{k_{target}} P^{(n)}.$$

For example, the nuclear reactor control apparatus 100 may obtain Equation 27 based on Equation 26 to update the angle of the control drum.

【Equation 27】

$$\theta^{(n+1)} = \left\{ \frac{P^{(n)}/k_{target} - R_{NCD}^{(n)}}{R_{CD}^{(n)}} \right\} \theta^{(n)},$$

The nuclear reactor control apparatus 100 according to an embodiment may update the angle of the control drum for maintaining the state of the nuclear reactor in a critical state by repeatedly calculating Equation 27 (or based on the number of nuclear fission source repetitions).

The nuclear reactor control apparatus 100 according to an embodiment may maintain the critical state of the nuclear reactor by updating the angle of the control drum while operating the nuclear reactor. By maintaining the critical state of the nuclear reactor, the nuclear reactor control apparatus 100 may keep the output from the reactor constant.

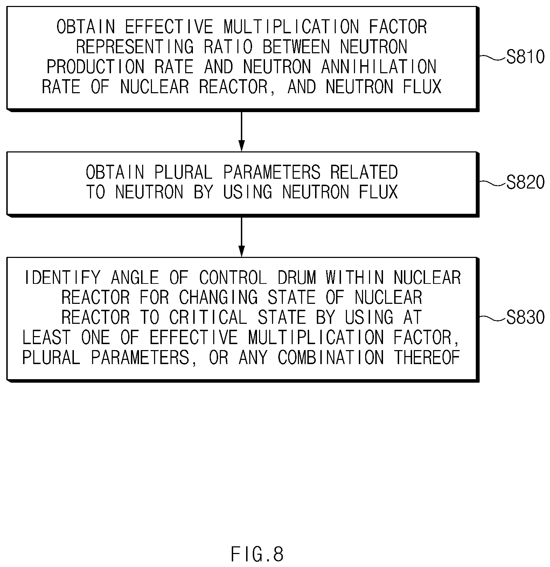

FIG. 8 illustrates an example of a flowchart related to a nuclear reactor control method according to an embodiment of the present disclosure. Hereinafter it is assumed that the nuclear reactor control apparatus 100 of FIG. 1 performs the process of FIG. 8.

Referring to FIG. 8, in operation S810, the nuclear reactor control method may include an operation of obtaining an effective multiplication factor and neutron flux representing a ratio between a neutron production rate and a neutron annihilation rate of a nuclear reactor.

Referring to FIG. 8, in operation S820, the nuclear reactor control method according to an embodiment may include an operation of obtaining the plurality of parameters related to neutrons by using neutron flux.

For example, the plurality of parameters may include at least one of a first parameter (e.g., $R_{CR}^{(n)}$ in Equation 20 and/or Equation 23) representing a neutron absorption rate by at least one of the plurality of control rods, a second parameter (e.g., $R_{NCR}^{(n)}$ in Equation 21 and/or Equation 24) representing another absorption rate different from the neutron absorption rate, a third parameter (e.g., $P^{(n)}$ in Equation 22 and/or Equation 25) representing a neutron production rate, or any combination thereof. For example, the second parameter may further include the neutron annihilation rate of neutrons leaking out of the nuclear reactor.

Referring to FIG. 8, in operation S830, the nuclear reactor control method may include an operation of identifying the angle of the control drum within the nuclear reactor for changing the state of the nuclear reactor to the critical state by using at least one of the effective multiplication factor, the plurality of parameters, or any combination thereof. The act of identifying the angle of the control drum may include identifying the angle of the control drum by changing the effective multiplication factor to a target effective multiplication factor (e.g., $k_{target}$ in Equation 27) that represents a critical state of the reactor.

For example, the act of identifying the angle of the control drum may include the act of updating the angle of the control drum (e.g., $\theta^{(n)}$ in Equation 27) to another angle (e.g., $\theta^{(n+1)}$ in Equation 27) to change the state of the reactor to a critical state of the reactor.

The nuclear reactor control apparatus described above may be realized by hardware elements, software elements and/or combinations thereof. For example, the devices and components illustrated in the embodiments of the present disclosure may be implemented in one or more general-use computers or special-purpose computers, such as a processor, a controller, an arithmetic logic unit (ALU), a digital signal processor, a microcomputer, a field programmable gate array (FPGA), a programmable logic unit (PLU), a microprocessor or any device which may execute instructions and respond. A processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the processing unit may include a plurality of processors or one processor and one controller. Also, the processing unit may have a different processing configuration, such as a parallel processor.

Software may include computer programs, codes, instructions or one or more combinations thereof and may configure a processing unit to operate in a desired manner or may independently or collectively control the processing unit. Software and/or data may be embodied in any type of machine, components, physical device, computer storage media or devices so as to be interpreted by the processing device or to provide instructions or data to the processing device. Software may be dispersed throughout computer systems connected via networks and may be stored or executed in a dispersion manner. Software and data may be recorded in one or more computer-readable storage media.

The methods according to the above-described embodiments may be implemented with program instructions which may be executed through various computer devices and may be recorded in computer-readable media. In this case, the medium may continuously store a computer-executable program, or temporarily store it for execution or download. In addition, the medium may be a variety of recording or storage devices in the form of single hardware or a combination of multiple hardware, and is not limited to a medium directly connected to a computer system, but may exist distributed on a network. The medium may be configured to store program instructions, including, for example, magnetic media such as hard disks, floppy disks, and magnetic tapes, optical recording media such as CD-ROMs and DVDs, magneto-optical media such as floptical disks, and ROM, RAM, flash memory, and the like. In addition, as examples of other media, there may be recording media or storage media managed by app stores that distribute applications, sites that supply or distribute various software, servers, or the like.

According to the embodiments of the present disclosure, it is possible to identify the critical state of a core by using a neutron equilibrium equation in a core design computer code.

According to the embodiments of the present disclosure, it is possible to fundamentally eliminate convergence instability when a search for a critical state of a core using a Monte Carlo nuclear design computer code is performed.

According to the embodiments of the present disclosure, it is possible to identify the position of the control rod and/or the angle of the control drum for the critical state of the core.

Furthermore, according to the embodiments of the present disclosure, it is possible to identify or predict the critical state of a core using a neutron equilibrium equation in a nuclear reactor simulator.

In addition, various effects that are directly or indirectly understood through the present disclosure may be provided.

While the embodiments have been shown and described by limited examples and drawings, it will be apparent to those skilled in the art that various modifications and variations may be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents. Thus, it is intended that the present disclosure covers other realizations and other embodiments of the present disclosure provided they come within the scope of the appended claims and their equivalents.

**Claims**

1. An apparatus for controlling a nuclear reactor, the apparatus comprising:

   a processor; and
   a memory,
   wherein the processor is configured to:

      obtain a neutron flux and an effective multiplication factor representing a ratio between a neutron production rate and a neutron annihilation rate in the nuclear reactor;
      obtain a plurality of parameters related to neutrons by using the neutron flux;
      update a total insertion length representing an entire length of insertion of each of a plurality of control rods into a core by using at least one of an overlap length representing a length of overlap of the plurality of control rods in the nuclear reactor, the plurality of parameters, or any combination thereof; and
      identify positions of each of the plurality of control rods for changing a state of the nuclear reactor to a critical state by using at least one of the updated total insertion length, the effective multiplication factor, or any combination thereof.

2. The apparatus of claim 1, wherein the plurality of parameters include at least one of a first parameter representing an absorption rate of the neutron by at least one of the plurality of control rods, a second parameter representing an absorption rate different from the absorption rate of the neutron, a third parameter representing the neutron production rate, or any combination thereof.

3. The apparatus of claim 2, wherein the processor is configured to update the plurality of parameters by using a moving average related to the plurality of parameters.

4. The apparatus of claim 2, wherein the second parameter further includes the neutron annihilation rate leaking out of the nuclear reactor.

5. The apparatus of claim 1, wherein the critical state of the nuclear reactor includes a state in which the neutron production rate and the neutron annihilation rate are in equilibrium.

6. The apparatus of claim 1, wherein the processor is configured to identify the positions of each of the plurality of control rods by changing the effective multiplication factor to a target effective multiplication factor representing the critical state of the nuclear reactor.

7. An apparatus for controlling a nuclear reactor, the apparatus comprising:

   a processor; and
   a memory,
   wherein the processor is configured to:

      obtain a neutron flux and an effective multiplication factor representing a ratio between a neutron production rate and a neutron annihilation rate in the nuclear reactor;

obtain a plurality of parameters related to neutrons by using the neutron flux; and

identify an angle of a control drum within the nuclear reactor for changing a state of the nuclear reactor to a critical state by using at least one of the effective multiplication factor, the plurality of parameters, or any combination thereof.

8. The apparatus of claim 7, wherein the plurality of parameters include at least one of a first parameter representing an absorption rate of the neutron by the control drum, a second parameter representing an absorption rate different from the absorption rate of the neutron, a third parameter representing the neutron production rate, or any combination thereof.

9. The apparatus of claim 8, wherein the second parameter further includes the neutron annihilation rate leaking out of the nuclear reactor.

10. The apparatus of claim 7, wherein the processor is configured to update the angle of the control drum by changing the effective multiplication factor to a target effective multiplication factor representing the critical state of the nuclear reactor.

11. A method of controlling a nuclear reactor, the method comprising:

obtaining a neutron flux and an effective multiplication factor representing a ratio between a neutron production rate and a neutron annihilation rate in the nuclear reactor;

obtaining a plurality of parameters related to neutrons by using the neutron flux;

updating a total insertion length representing an entire length of insertion of each of a plurality of control rods into a core by using at least one of an overlap length representing a length of overlap of the plurality of control rods in the nuclear reactor, the plurality of parameters, or any combination thereof; and

identifying positions of each of the plurality of control rods for changing a state of the nuclear reactor to a critical state by using at least one of the updated total insertion length, the effective multiplication factor, or any combination thereof.

NUCLEAR REACTOR
CONTROL APPARATUS
100

PROCESSOR
110

MEMORY
120

FIG.1

FIG.2

300

321　　　　　　　310　　　　　　322

201

221

330

340

A　　　　　　　　　　　　　　　　B

Z

X　　Y

FIG.3

FIG.4

FIG.5A

505

FIG.5B

OBTAIN EFFECTIVE MULTIPLICATION FACTOR REPRESENTING RATIO BETWEEN NEUTRON PRODUCTION RATE AND NEUTRON ANNIHILATION RATE OF NUCLEAR REACTOR AND NEUTRON FLUX — S610

OBTAIN PLURAL PARAMETERS RELATED TO NEUTRON BY USING NEUTRON FLUX — S620

UPDATE TOTAL INSERTION LENGTH REPRESENTING ENTIRE LENGTH OF INSERTION OF EACH CONTROL ROD INTO CORE BY USING AT LEAST ONE OF OVERLAP LENGTH REPRESENTING LENGTH OF OVERLAP OF PLURAL CONTROL RODS IN NUCLEAR REACTOR, PLURAL PARAMETERS, OR ANY COMBINATION THEREOF — S630

IDENTIFY POSITION OF EACH CONTROL ROD FOR CHANGING STATE OF NUCLEAR REACTOR TO CRITICAL STATE BY USING AT LEAST ONE OF UPDATED TOTAL INSERTION LENGTH, EFFECTIVE MULTIPLICATION FACTOR, OR ANY COMBINATION THEREOF — S640

FIG.6

EP 4 651 153 A1

FIG.7

23

OBTAIN EFFECTIVE MULTIPLICATION FACTOR REPRESENTING RATIO BETWEEN NEUTRON PRODUCTION RATE AND NEUTRON ANNIHILATION RATE OF NUCLEAR REACTOR, AND NEUTRON FLUX ~S810

OBTAIN PLURAL PARAMETERS RELATED TO NEUTRON BY USING NEUTRON FLUX ~S820

IDENTIFY ANGLE OF CONTROL DRUM WITHIN NUCLEAR REACTOR FOR CHANGING STATE OF NUCLEAR REACTOR TO CRITICAL STATE BY USING AT LEAST ONE OF EFFECTIVE MULTIPLICATION FACTOR, PLURAL PARAMETERS, OR ANY COMBINATION THEREOF ~S830

FIG.8

| | Europäisches Patentamt European Patent Office Office européen des brevets | **EUROPEAN SEARCH REPORT** | **Application Number** EP 25 17 5289 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 181 759 B1 (HEIBEL MICHAEL D [US]) 30 January 2001 (2001-01-30) * column 2, line 26 - line 67; claim 1 * ----- | 1-11 | INV. G21D3/00 ADD. G21C7/08 |
| X | MAZROU HAKIM ET AL: "Assessment of the safety impact caused by the variations of the critical position of control rods and by the presence of an in-core flux trap on the power peaking factors in an MTR-type research reactor", NUCLEAR ENGINEERING AND DESIGN, AMSTERDAM, NL, vol. 414, 22 August 2023 (2023-08-22), XP087435704, ISSN: 0029-5493, DOI: 10.1016/J.NUCENGDES.2023.112553 [retrieved on 2023-08-22] * sec. 4 and 5 * ----- | 1-11 | |
| X | JP 2022 111680 A (HITACHI GE NUCLEAR ENERGY LTD) 1 August 2022 (2022-08-01) * paragraphs [0001], [0037] - [0045], [0066], [0073]; figure 2 * ----- | 1-11 | TECHNICAL FIELDS SEARCHED (IPC) G21D G21C |
| X | US 11 393 599 B2 (WESTINGHOUSE ELECTRIC CO LLC [US]) 19 July 2022 (2022-07-19) * claims 1,8,9 * ----- | 1-11 | |

The present search report has been drawn up for all claims

| Place of search | Date of completion of the search | Examiner |
|---|---|---|
| Munich | 1 October 2025 | Grivas, Symeon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5289

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | | Publication date | Patent family member(s) | | Publication date |
|---|---|---|---|---|---|
| US 6181759 | B1 | 30-01-2001 | DE | 60016843 T2 | 01-12-2005 |
| | | | EP | 1071098 A1 | 24-01-2001 |
| | | | US | 6181759 B1 | 30-01-2001 |
| JP 2022111680 | A | 01-08-2022 | JP | 7374140 B2 | 06-11-2023 |
| | | | JP | 2022111680 A | 01-08-2022 |
| US 11393599 | B2 | 19-07-2022 | CN | 111587460 A | 25-08-2020 |
| | | | EP | 3724897 A2 | 21-10-2020 |
| | | | ES | 3015739 T3 | 07-05-2025 |
| | | | JP | 7308009 B2 | 13-07-2023 |
| | | | JP | 2021507215 A | 22-02-2021 |
| | | | KR | 20200088497 A | 22-07-2020 |
| | | | US | 2019180885 A1 | 13-06-2019 |
| | | | WO | 2019164570 A2 | 29-08-2019 |
| | | | ZA | 202003838 B | 27-11-2024 |

For more details about this annex : see Official Journal of the European Patent Office, No. 12/82